# EUROPÄISCHE PATENTSCHRIFT

(11) **EP 2 030 537 B1**
(45) Veröffentlichungstag und Bekanntmachung des Hinweises auf die Patenterteilung: **29.09.2010**
(21) Anmeldenummer: 07115112.0
(22) Anmeldetag: 28.08.2007
(51) Int. Cl.: A47J 31/36

(54) **Brüheinrichtung für eine Kaffeemaschine**
Brewing device for a coffee machine
Dispositif-infuseur pour une machine à café

(43) Veröffentlichungstag der Anmeldung: 04.03.2009
(73) Patentinhaber: Schaerer AG, 4528 Zuchwil (CH)
(72) Erfinder: Wüthrich, Christoph, 3053 Wiggiswil (CH)
(74) Vertreter: BOVARD AG

(56) Entgegenhaltungen:
- FR-A- 2 395 730
- GB-A- 2 165 140

## Beschreibung

Die vorliegende Erfindung bezieht sich auf eine Brüheinrichtung für eine Kaffeemaschine, umfassend einen Brühzylinder mit einer zylindrischen Bohrung und zwei Kolben, durch welche der Brühzylinder zur Bildung einer Brühkammer abschliessbar ist, wobei der Brühzylinder und die Kolben relativ zueinander verschiebbar in einem Rahmen gehalten sind und über eine Antriebseinrichtung antreibbar sind, eine Kaffeepulverzuführeinrichtung, mit welcher das Kaffeepulver vor dem Brühvorgang und dem Verschliessen der Brühkammer in diese einfüllbar ist, und eine mit einem Abstreifelement versehene Abstreifeinrichtung, mit welchem der nach dem Brühvorgang aus der Brühkammer durch einen Kolben ausgestossene Kaffeepulverkuchen in einen Auffangbehälter abstreifbar ist.

Derartige Brüheinrichtungen sind in vielfältiger Weise bekannt und werden sowohl in Haushaltskaffeemaschinen wie auch in Restaurationskaffeemaschinen eingesetzt. Zum Bezug eines Kaffees wird die erforderliche Menge von üblicherweise frisch gemahlenem Kaffeepulver, abhängig davon, welche Art von Kaffee bezogen wird, wie beispielsweise normaler Kaffee, Espressokaffee, Ristrettokaffee usw., in die Brühkammer eingefüllt. Die Brühkammer wird danach verschlossen, wonach heisses Wasser mit dem gewünschten Druck durch die Brühkammer geleitet wird, wobei Kaffee gebrüht wird. Der so frisch gebrühte Kaffee gelangt dann über einen Auslass in das bereit gestellte Gefäss. Die Brühkammer wird danach geöffnet, der darin befindliche Kaffeepulverrest wird aus der Brühkammer ausgeworfen und gelangt in einen Behälter.

Eine derartige Brüheinrichtung ist beispielsweise aus der EP-A 0 528 758 bekannt. Nach dem Brühen eines Kaffees wird der im Brühzylinder zurückbleibende Kaffeepulverkuchen durch den einen Kolben aus dem Brühzylinder ausgestossen und von einem Abstreifer einer Abstreifeinrichtung wegbefördert, sodass dieser Kaffeepulverkuchen in einen Auffangbehälter gelangt. Dieser Kaffeepulverkuchen hat, wegen der Komprimierung des Kaffeepulvers in der Brühkammer zum Brühen des Kaffees und dem damit erreichbaren Widerstand, damit ein Druck des Brühwassers im Brühzylinder von etwa 8 bar erreicht werden kann, eine kompakte Kuchenform, die in den Auffangbehälter gelangt. Dieser Auffangbehälter dient auch als Sammelbehälter für diese Kaffeepulverkuchen, die durch das Abstreifen in ungeordneter Weise neben-und übereinander zu liegen kommen. Durch die kompakte Form dieser Kaffeepulverkuchen erhält man zwischen diesen somit in diesem Auffangbehälter grosse Hohlräume, der Auffangbehälter muss somit entweder gross gestaltet werden oder ist relativ schnell gefüllt, sodass er öfters entleert werden muss, was nicht erwünscht ist.

Es ist auch wünschenswert, dass eine Kaffeemaschine eine nicht zu grosse Bauhöhe aufweisen sollte, da eine beispielsweise auf einer Theke eines Restaurants aufgestellte Kaffeemaschine den Blick des Personals auf die Gäste nicht beeinträchtigen sollte. Der Auffangbehälter für die Kaffeepulverkuchen lässt sich bei der vorliegenden Brüheinrichtung im Wesentlichen nur unterhalb der Kaffeebrühgruppe anordnen, damit der abgestreifte Kaffeepulverkuchen in diesen Behälter fallen kann. Wie vorgängig erwähnt worden ist, sollte die Aufnahmekapazität dieser Auffangbehälter möglichst gross sein, damit sie nicht zu oft geleert werden müssen, um die Bauhöhe der Kaffeemaschine in einem wünschbaren Mass halten zu können, kann dieser Auffangbehälter aber nicht zu hoch gebaut werden. Somit muss bezüglich Abmessungen des Auffangbehälters und Fassungsvermögen ein Kompromiss eingegangen werden, der den beiden Forderungen in etwa gerecht wird.

Die Aufgabe der vorliegenden Erfindung besteht nun darin, die Kaffeepulverkuchen derart zu manipulieren, dass die zwischen diesen auftretenden Hohlräumen bei der Ablage im Auffangbehälter möglichst gering gehalten werden können, wodurch mit kleinerem Volumen des Auffangbehälters mehr Kaffeepulverkuchen aufgenommen werden können.

Erfindungsgemäss erfolgt die Lösung dieser Aufgabe dadurch, dass zwischen Abstreifelement und Auffangbehälter ein Teilelement angeordnet ist, welches den vom Abstreifelement abgestreiften Kaffeepulverkuchen, bevor er in den Auffangbehälter gelangt, in Stücke teilt.

Bevor somit der Kaffeepulverkuchen in den Auffangbehälter gelangt, wird dieser durch das Teilelement zerbrochen oder zerschnitten und in kleinere Stücke geteilt, wodurch im Auffangbehälter zwischen den einzelnen Teilen dieses Kaffeepulverkuchens ein wesentlich geringerer Hohlraum entsteht und dadurch die Aufnahmekapazität des entsprechenden Auffangbehälters in massiver Weise verbessert wird.

In vorteilhafter Weise ist das Teilelement im Wesentlichen senkrecht zur kreisförmigen Oberfläche des Kaffeepulverkuchens, wenn dieser das Teilelement durchfährt, ausgerichtet, wodurch eine optimale Zerkleinerung oder Zerbröckelung des Kaffeepulverkuchens erreicht wird.

Eine weitere vorteilhafte Ausgestaltung der Erfindung besteht darin, dass das Teilelement so angeordnet ist, dass dessen Abstand vom Abstreifelement in dessen voll ausgefahrenen Abstreifposition kleiner ist als der Durchmesser des Kaffeepulverkuchens, wodurch erreicht wird, dass das Abstreifelement den Kaffeepulverkuchen mindestens teilweise durch dieses Teilelement drückt, sodass eine Zerstückelung dieses Kaffeepulverkuchens in optimaler Weise gewährleistet wird.

In vorteilhafter Weise ist das Teilelement auf einer Rutsche angebracht, welche den abgestreiften Kaffeepulverkuchen in den Auffangbehälter leitet. Dadurch wird ein einfaches Anbringen dieses Teilelementes und somit ein einfacher konstruktiver Aufbau erreicht.

Die Rutsche kann am Rahmen der Brüheinrichtung angebracht werden, die Rutsche kann aber auch am Auffangbehälter selbst angebracht sein. Je nach Aufbau der Brüheinrichtung und des Auffangbehälters kann die eine oder andere Lösung vorteilhaft sein.

In vorteilhafter Weise ist das Teilelement als Klinge ausgebildet, wodurch der Kaffeepulverkuchen in unterschiedliche Teile aufgeschnitten wird.

Eine weitere vorteilhafte Ausgestaltung der Erfindung besteht darin, dass die Klinge bezüglich der Abstreifeinrichtung, in welche der Kaffeepulverkuchen abstreifbar ist, winklig angeordnet ist, wodurch man erreicht, dass der Kaffeepulverkuchen in mehr kleinere Teile zerfällt.

Nachfolgend wird eine Ausführungsform der erfindungsgemässen Brüheinrichtung mit Bezugnahme auf die beiliegende Zeichnung beispielhaft näher erläutert.

Es zeigt:
Fig. 1 eine Schnittdarstellung einer Brüheinrichtung einer Kaffeemaschine beim Einfüllvorgang des Kaffeepulvers in die Brühkammer;
Fig. 2 eine Schnittdarstellung der Brüheinrichtung mit geschlossener Brühkammer während des Brühvorgangs für einen Kaffee;
Fig. 3 eine Schnittdarstellung der Brüheinrichtung mit geöffneter Brühkammer und durch den unteren Kolben ausgestossenem Kaffeepulverkuchen;
Fig. 4 eine Schnittdarstellung der Brüheinrichtung mit beginnender Abstreifung des Kaffeepulverkuchens durch die Abstreifeinrichtung;
Fig. 5 eine Schnittdarstellung der Brüheinrichtung, in welcher der Abstreifer den Kaffeepulverkuchen über das Teilelement drückt, wodurch der Kaffeepulverkuchen in einzelne Stücke geteilt wird;
Fig. 6 eine Ansicht auf die Brüheinrichtung gemäss den Fig. 1 bis 5; und
Fig. 7 eine räumliche Ansicht der Brüheinrichtung gemäss den vorhergehenden Figuren.

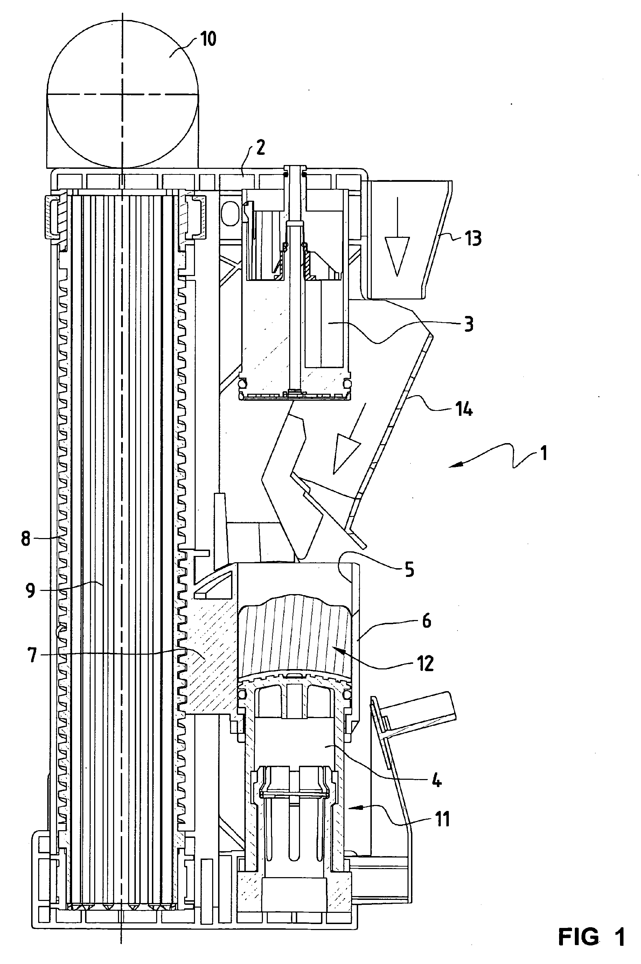

Wie aus den Fig. 1 bis 5 ersichtlich ist, umfasst die Brüheinrichtung 1 einen in einem Rahmen 2 ortsfest gehaltenen oberen Kolben 3. Dem oberen Kolben 3 axial gegenüber liegend ist ein unterer Kolben 4 vorgesehen, der bezüglich des oberen Kolbens 3 axial verschiebbar ist. Dieser untere Kolben 4 ist in einer zylindrischen Bohrung 5 eines Brühzylinders 6 gehalten, welcher Brühzylinder 6 ebenfalls axial verschiebbar ist. Der Brühzylinder 6 ist mit einem Gewindeteil 7 ausgestattet, welche mit einem Gewinde 8 einer drehbar im Rahmen 2 gehaltenen Spindel 9 in Eingriff ist. Diese Spindel 9 ist über einen Elektromotor 10 antreibbar, der ebenfalls am Rahmen 2 angebracht ist.

In Fig. 1 ist die Brüheinrichtung 1 in der Füllposition dargestellt. Dies bedeutet, dass sich der untere Kolben 4 in der untersten Position befindet, in welcher er durch die am Rahmen angebrachte Klinkeinrichtung 11 gehalten wird. Diese Position hat der untere Kolben 4 dadurch erreicht, dass der Brühzylinder 6 über die Spindel 9 ebenfalls in die unterste Position gebracht worden ist, in welche der untere Kolben 4 mitgenommen worden ist, bis er in die Klinkeinrichtung 11 eingeklinkt ist, danach ist der Brühzylinder 6 durch entsprechendes Verdrehen der Spindel 9 wieder hochgefahren worden, wie dies in Fig. 1 ersichtlich ist, der untere Kolben verblieb hierbei in der untersten Position, der Brühzylinder 6 hat sich somit bezüglich des unteren Kolbens 4 angehoben, wodurch innerhalb des Brühzylinders 6 die Brühkammer 12 gebildet wird.

In diese Brühkammer 12 wird nun das frisch gemahlene Kaffeepulver zugeführt. Dieses Kaffeepulver wird in bekannter Weise in einer Kaffeemühle, die nicht dargestellt ist, gemahlen, das Pulver gelangt über einen ersten Trichter 13 auf einen schwenkbaren Trichter 14, durch welchen das gemahlene Kaffeepulver in die Brühkammer 12 geleitet wird. Hierbei wird die zugeführte Kaffeepulvermenge in bekannter Weise dosiert, je nachdem, welche Art von Kaffee bezogen werden soll.

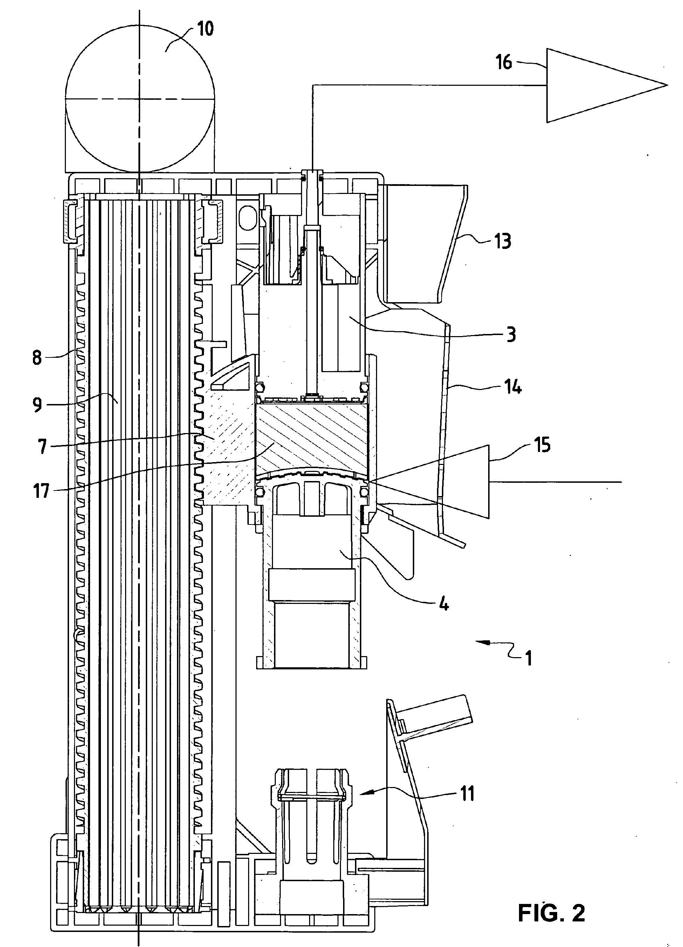

Nach dem Befüllen der Brühkammer 12 mit frisch gemahlenem Kaffeepulver wird die Spindel 9 über den Elektromotor 10 in Rotation versetzt, über den Gewindeteil 7 wird der Brühzylinder 6 hochgefahren, wobei der untere Kolben 4 über entsprechende Mitnehmer mitgenommen wird. Der Brühzylinder 6 und der untere Kolben 4 werden solange hochgefahren, bis die Brühkammer 12 durch den oberen Kolben 3 verschlossen wird und das sich in der Brühkammer 12 befindende Kaffeepulver gepresst wird. In dieser Position, die in Fig. 2 dargestellt ist, ist die Brühstellung erreicht. In bekannter Weise kann nun von unten her in die Brühkammer 12 das heisse Wasser zugeführt werden, wie dies durch Pfeil 15 dargestellt ist, das heisse Wasser durchströmt die Brühkammer 12 und das darin sich befindende gemahlene Kaffeepulver und wird über einen Abflusskanal, der in bekannter Weise im oberen Kolben 3 angebracht ist, als gebrühter Kaffee abgeleitet, wie dies durch Pfeil 16 dargestellt ist und gelangt in bekannter Weise über eine nicht dargestellte Leitung in einen Ausguss der Kaffeemaschine und von dort in das bereit gestellte Gefäss. Zum Brühen des Kaffees wird das in der Brühkammer 12 sich befindende Kaffeepulver zwischen den beiden Kolben 3 und 4 derart komprimiert, dass dieses dem durchströmenden Brühwasser einen Widerstand entgegensetzt, sodass das Brühwasser mit einem Druck von etwa 8 bar durch die Brühkammer 12 gepresst werden muss. Dadurch entsteht in der Brühkammer 12 ein Kaffeepulverkuchen, der sehr kompakt und feucht ist.

Wie aus Fig. 2 ersichtlich ist, wird der schwenkbare Trichter 14 beim Hochfahren des Brühzylinders 6 mit dem unteren Kolben 4 weggeschwenkt, hierbei ist dieser schwenkbare Trichter 14 mit einer nicht dargestellten Feder ausgestattet, welche den schwenkbaren Trichter 14 in die in Fig. 1 dargestellte Position zurückdrücken möchte.

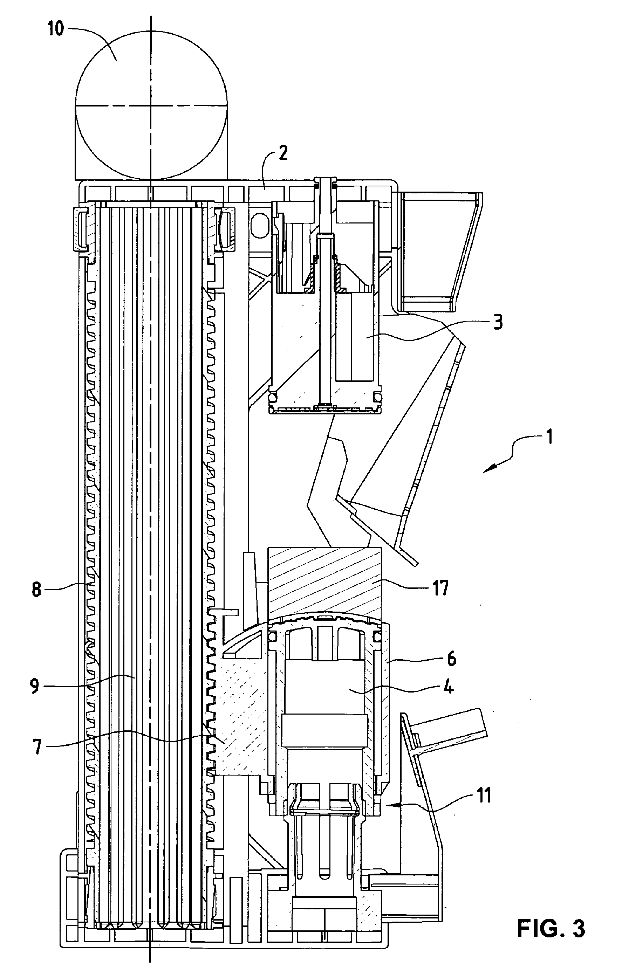

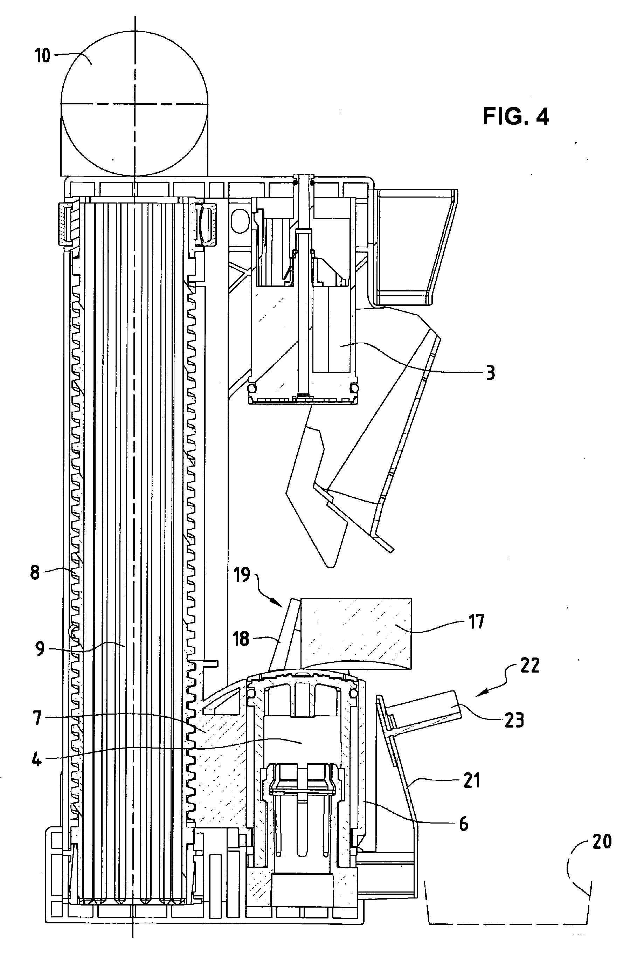

Nach der Durchführung des Brühvorgangs wird die Brühkammer 12 geöffnet, indem der Brühzylinder 6 und der untere Kolben 4 durch entsprechendes Verdrehen der Spindel 9 nach unten gefahren werden, wie dies in Fig. 3 dargestellt ist. Der untere Kolben 4 erreicht hierbei mit seinem unteren Ende die Klinkeinrichtung 11 und stützt sich darauf. Der Brühzylinder 6 wird weiter nach unten gefahren, der untere Kolben 4 bleibt stehen, wodurch der Kaffeepulverkuchen 17 aus dem Brühzylinder 6 ausgestossen wird, wie dies in Fig. 3 ersichtlich ist. Wenn der Brühzylinder 6 mit seinem oberen Rand den oberen Rand des unteren Kolbens 4 erreicht hat, wird der untere Kolben 4 mit dem weiter nach unten verfahrbaren Brühzylinder 6 über entsprechende Anschläge mitgenommen und in die Klinkeinrichtung 11 eingefahren, wie dies in Fig. 4 dargestellt ist. Wenn der Brühzylinder 6 und der untere Kolben 4 in den Bereich der unteren Position gelangen, wird ein Abstreifelement 18 einer Abstreifeinrichtung 19 in bekannter Weise mechanisch betätigt. Hierzu bewegt sich das Abstreifelement 18 quer über die Oberfläche des unteren Kolbens 4, der Kaffeepulverkuchen 17 wird, wie aus Fig. 4 ersichtlich ist, vom unteren Kolben 4 und dem Brühzylinder 6 abgestreift.

Der auszuwerfende Kaffeepulverkuchen 17 soll in einen in der Kaffeemaschine untergebrachten Behälter 20, der hier nur schematisch dargestellt ist, gelangen. Hierzu ist im vorliegenden Ausführungsbeispiel am Rahmen 2 eine Rutsche 21 angebracht, über welche der auszuwerfende Kaffeepulverkuchen 17 in den Behälter 20 gelangen kann. Es ist auch denkbar, diese Rutsche 21 am Behälter 20 anzubringen. An der Rutsche 21 ist ein Teilelement 22 angebracht, das praktisch senkrecht über die Rutschoberfläche der Rutsche 21 vorsteht. Dieses Teilelement 22 ist im vorliegenden Fall als flächige Klinge 23 ausgebildet. Selbstverständlich könnte dieses Teilelement 22 auch eine andere Form aufweisen, beispielsweise ein Stab oder Drahtstück, selbstverständlich könnten auch mehrere nebeneinander angebrachte Teilelemente eingesetzt werden. Es ist auch denkbar, dass diese Teilelemente an einer anderen Stelle an der Brüheinrichtung oder am Behälter angebracht sind, entscheidend ist, dass dieses Teilelement oder diese Teilelemente sich quer über den Weg erstrecken, den der Kaffeepulverkuchen 17 nach dem Abstreifen und vor dem Erreichen des Behälters durchläuft.

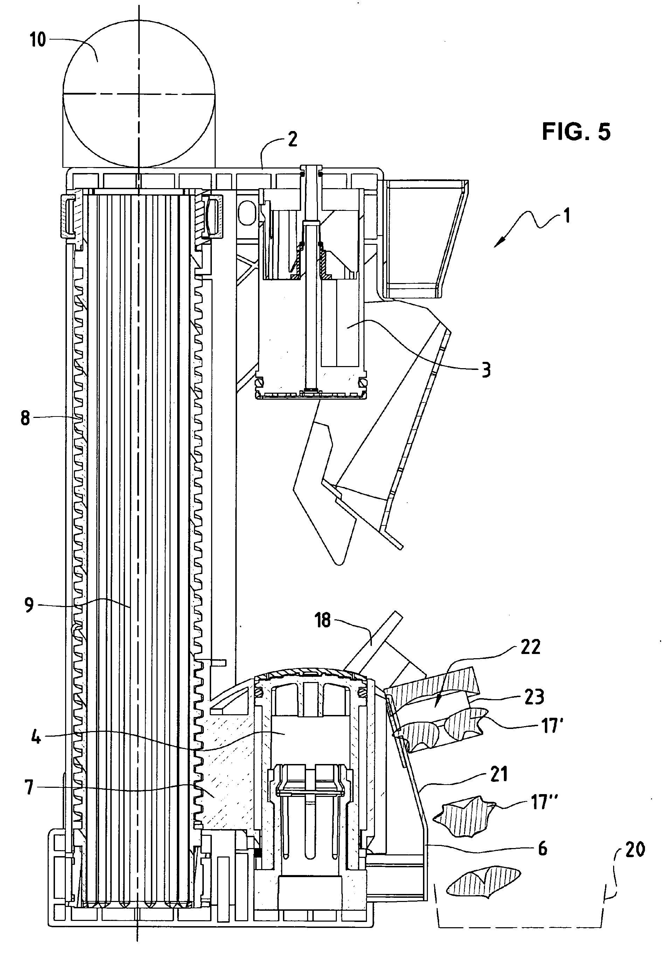

Wie aus Fig. 5 ersichtlich ist, wird der Kaffeepulverkuchen 17 durch das Abstreifelement 18 über die Klinge 23 gedrückt, die Klinge 23 bewirkt, dass der Kaffeepulverkuchen 17 in verschiedene kleinere Stücke 17', 17" unterteilt wird, welche dann in den Behälter 20 fallen. Diese kleinen Stücke 17', 17", in welche der ursprüngliche Kaffeepulverkuchen 17 aufgeteilt wird, füllen den Raum im Behälter 20 ohne grösseren Hohlräume auf, der Behälter 20 kann somit mehr zerkleinerte Kaffeepulverkuchen aufnehmen, als wenn diese nicht zerkleinert würden. Dadurch können die Abmessungen des Behälters kleiner gehalten werden, ohne dass dieser öfters geleert werden müsste.

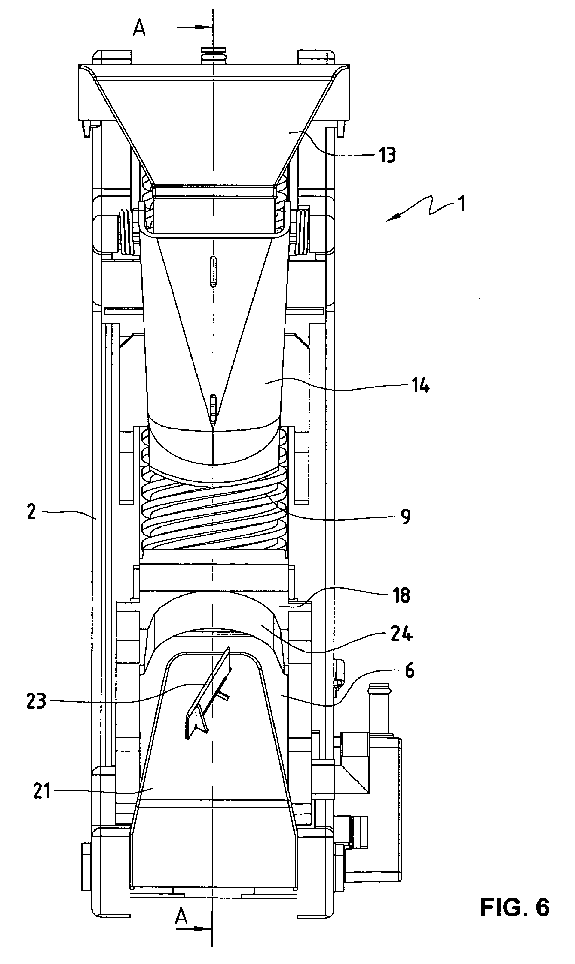

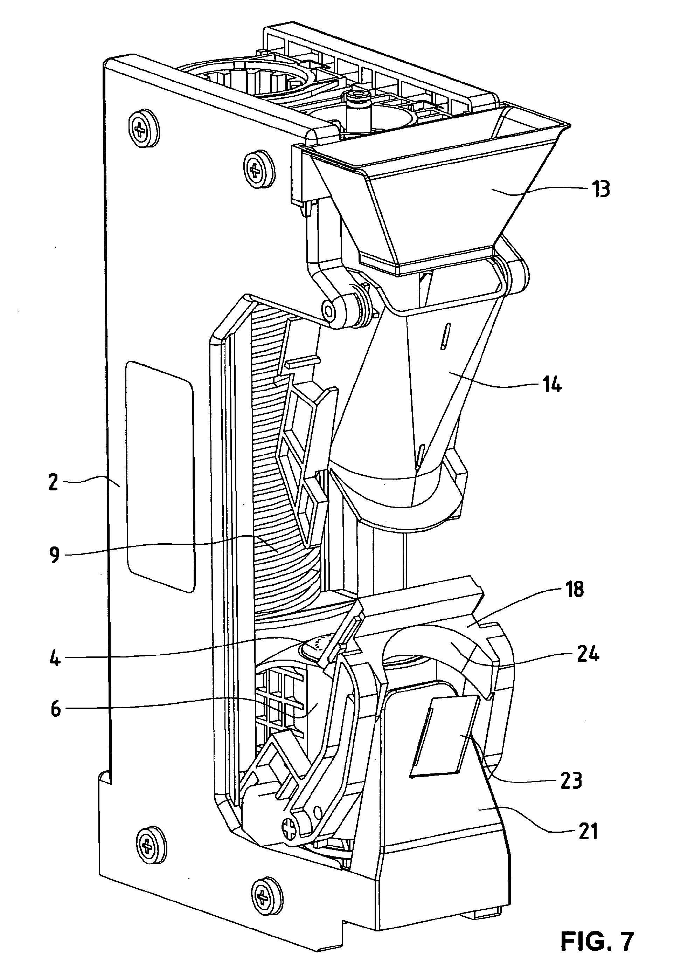

Aus den Fig. 6 und 7 ist ersichtlich, wie die Klinge 23 auf der Rutsche 21 angeordnet ist. Die Klinge 23 ist hierbei bezüglich der Abstreifrichtung, in welcher der Kaffeepulverkuchen abstreifbar ist, winklig angeordnet. Durch dieses winklige Schrägstellen der Klinge 23 bezüglich der Abstreifrichtung wird erreicht, dass der abzustreifende Kaffeepulverkuchen in mehr Teile unterteilt wird, als wenn diese Klinge 23 in die Abstreifrichtung ausgerichtet wäre. Durch dieses winklige Schrägstellen wird zusätzlich zum Teilen ein teilweises Zerquetschen des Kaffeepulverkuchens erreicht.

Aus diesen beiden Figuren 6 und 7 ist auch ersichtlich, dass das Abstreifelement 18 eine gebogene Abstreifläche 24 aufweist. Mit dieser gebogenen Abstreifläche 24 wird der abzustreifende Kaffeepulverkuchen fast über die Hälfte seines Umfangs umfasst, wodurch ein optimales Abstreifen erfolgen kann.

Aus den Figuren 6 und 7 ist auch ersichtlich, dass der Abstand vom Teilelement 22 bzw. der Klinge 23 vom Abstreifelement 18 in dessen voll ausgefahrenen Abstreifposition kleiner ist als der Durchmesser des Kaffeepulverkuchens 17. Dadurch wird erreicht, dass während des Abstreifvorganges, wenn das Abstreifelement gegen seine voll ausgefahrene Abstreifposition fährt, der Kaffeepulverkuchen über das Teilelement 22 bzw. die Klinge 23 gepresst wird, wodurch gewährleistet ist, dass der Kaffeepulverkuchen in einzelne Stücke geteilt wird.

Mit dieser Ausgestaltung wird erreicht, dass der Kaffeepulverkuchen, der aus der Brühkammer abgeführt wird, in kleine Teile zerlegt wird, wodurch im Auffangbehälter weniger Hohlräume entstehen, als wenn der Kaffeepulverkuchen in seiner ganzen Form in diesen Behälter gelangt, die Aufnahmekapazität der Behälter wird somit verbessert, auch wenn der Auffangbehälter kleiner ausgestaltet wird, ist es nicht erforderlich, diesen öfter zu entleeren.

## Patentansprüche

1. Brüheinrichtung für eine Kaffeemaschine, umfassend einen Brühzylinder (6) mit einer zylindrischen Bohrung und zwei Kolben (3, 4), durch welche der Brühzylinder (6) zur Bildung einer Brühkammer (12) abschliessbar ist, wobei der Brühzylinder (6) und die Kolben (3, 4) relativ zueinander verschiebbar in einem Rahmen (2) gehalten sind und über eine Antriebseinrichtung (9, 10) antreibbar sind, eine Kaffeepulverzuführeinrichtung, mit welcher das Kaffeepulver vor dem Brühvorgang und vor dem Verschliessen der Brühkammer (12) in diese einfüllbar ist, und eine mit einem Abstreifelement (18) versehene Abstreifeinrichtung (19), mit welchem der nach dem Brühvorgang aus der Brühkammer (12) durch einen Kolben (4) ausgestossene Kaffeepulverkuchen (17) in einen Auffangbehälter (20) abstreifbar ist, **dadurch gekennzeichnet, dass** zwischen Abstreifelement (18) und Auffangbehälter (20) ein Teilelement (22) angeordnet ist, welches den vom Abstreifelement (18) abgestreiften Kaffeepulverkuchen (17), bevor er in den Auffangbehälter (20) gelangt, in Stücke teilt.

2. Brüheinrichtung nach Anspruch 1, **dadurch gekennzeichnet, dass** das Teilelement im Wesentlichen senkrecht zur kreisförmigen Oberfläche des Kaffeepulverkuchens, wenn dieser das Teilelement durchfährt, ausgerichtet ist.

3. Brüheinrichtung nach Anspruch 1 oder 2, **dadurch gekennzeichnet, dass** das Teilelement (22) so angeordnet ist, dass dessen Abstand vom Abstreifelement (18) in dessen voll ausgefahrenen Abstreifposition kleiner ist als der Durchmesser des Kaffeepulverkuchens (17).

4. Brüheinrichtung nach einem der Ansprüche 1 bis 3, **dadurch gekennzeichnet, dass** das Teilelement (22) auf einer Rutsche (21) angebracht ist, welche den abgestreiften Kaffeepulverkuchen (17) in den Auffangbehälter (20) leitet.

5. Brüheinrichtung nach Anspruch 4, **dadurch gekennzeichnet, dass** die Rutsche (21) am Rahmen (2) der Brüheinrichtung angebracht ist.

6. Brüheinrichtung nach Anspruch 4, **dadurch gekennzeichnet, dass** die Rutsche (21) am Auffangbehälter (20) angebracht ist.

7. Brüheinrichtung nach einem der Ansprüche 1 bis 6, **dadurch gekennzeichnet, dass** das Teilelement (22) als Klinge (23) ausgebildet ist.

8. Brüheinrichtung nach Anspruch 7, **dadurch gekennzeichnet, dass** die Klinge (23) bezüglich der Abstreifrichtung, in welcher der Kaffeepulverkuchen (17) abstreifbar ist, winklig angeordnet ist.

## Claims

1. Brewing facility for a coffee machine, comprising a brewing cylinder (6) with a cylindrical bore hole and two plungers (3, 4) by means of which the brewing cylinder (6) can be sealed to form a brewing chamber (12), whereby the brewing cylinder (6) and the plungers (3, 4) are held in a frame (2) such that they can be shifted with respect to each other, and can be driven by means of a driving facility (9, 10), a coffee feed facility by means of which the coffee powder can be filled into the brewing chamber (12) before the brewing process and before the brewing chamber (12) is sealed, and a stripping facility (19) that is provided with a stripping element (18) by means of which the coffee powder cake (17) that is ejected from the brewing chamber (12) by a plunger (4) after the brewing process can be stripped into a collecting container (20), **characterized in that** a disintegration element (22), which disintegrates the coffee powder cake (17) stripped by the stripping element (18) into pieces before it proceeds into the collecting container (20), is arranged between stripping element (18) and collecting container (20).

2. Brewing facility according to claim 1, **characterized in that** the disintegration element is oriented essentially perpendicular to the circular surface of the coffee powder cake when same drives through the disintegration element.

3. Brewing facility according to claim 1 or 2, **characterized in that** the disintegration element (22) is arranged such that its distance from the stripping element (18), being in its fully driven-out stripping position, is smaller than the diameter of the coffee powder cake (17).

4. Brewing facility according to any one of the claims 1 to 3, **characterized in that** the disintegration element (22) is situated on a slide (21) that guides the stripped coffee powder cake (17) into the collecting container (20).

5. Brewing facility according to claim 4, **characterized in that** the slide (21) is situated on the frame (2) of the brewing facility.

6. Brewing facility according to claim 4, **characterized in that** the slide (21) is situated on the collecting container (20).

7. Brewing facility according to any one of the claims 1 to 6, **characterized in that** the disintegration element (22) is provided in the form of a blade (23).

8. Brewing facility according to claim 7, **characterized in that** the blade (23) is arranged at an angle with respect to the stripping facility, in which the coffee powder cake (17) can be stripped.

## Revendications

1. Dispositif infuseur pour une machine à café, comprenant un cylindre infuseur (6) avec un perçage central et deux pistons (3, 4) qui ferment le cylindre infuseur (6) pour former une chambre d'infusion (12), le cylindre infuseur (6) et les pistons (3, 4) étant maintenus coulissants entre eux dans un cadre (2) et étant entraînés par un dispositif d'entraînement (9, 10), un dispositif d'amenée de poudre de café pour le remplissage de la chambre d'infusion (12) avec de la poudre de café et un dispositif de raclage (19) muni d'un élément de raclage (18) pour l'évacuation de la galette de poudre de café (17) éjectée après l'infusion hors de la chambre d'infusion (12) par un piston (4) dans un récipient de collecte (20), **caractérisé en ce qu'**entre l'élément de raclage (18) et le récipient de collecte (20), il est disposé un élément partiel (22) qui divise en morceau la galette de poudre de café (17) raclé par l'élément de raclage (18) avant qu'il ne parvienne dans le récipient de collecte (20).

2. Dispositif infuseur selon la revendication 1, **caractérisé en ce que** l'élément de séparation est orienté sensiblement perpendiculairement à la surface circulaire de la galette de poudre de café quand celle-ci traverse l'élément de séparation.

3. Dispositif infuseur selon la revendication 1 ou 2, **caractérisé en ce que** l'élément de séparation (22) est disposé de sorte que sa distance avec l'élément de raclage (18) dans la position de raclage de ce dernier complètement sortie est inférieure au diamètre de la galette de poudre de café (17).

4. Dispositif infuseur selon l'une des revendications 1 à 3, **caractérisé en ce que** l'élément de séparation (22) est placé sur un glissoir (21) qui dirige la galette de poudre de café (17) dans le récipient de collecte (20).

5. Dispositif infuseur selon la revendication 4, **caractérisé en ce que** le glissoir (21) est fixé sur le cadre (2) du dispositif infuseur.

6. Dispositif infuseur selon la revendication 4, **caractérisé en ce que** le glissoir (21) est disposé sur le récipient de collecte (20).

7. Dispositif selon l'une des revendications 1 à 6, **caractérisé en ce que** l'élément de séparation (22) est réalisé comme une lame (23).

8. Dispositif infuseur selon la revendication 7, **caractérisé en ce que** la lame (23) est disposée en formant un angle par rapport à la direction de raclage dans laquelle est raclée la galette de poudre de café (17).
